# EUROPÄISCHE PATENTSCHRIFT

(11) **EP 3 063 428 B1**
(45) Veröffentlichungstag und Bekanntmachung des Hinweises auf die Patenterteilung: **27.11.2019**
(21) Anmeldenummer: 14758092.2
(22) Anmeldetag: 22.08.2014
(51) Int. Cl.: F16F 3/087, F16F 15/08

(54) **LAGER**
BEARING
PALIER

(30) Priorität: 30.10.2013 DE 102013018185
(43) Veröffentlichungstag der Anmeldung: 07.09.2016
(73) Patentinhaber: Carl Freudenberg KG, 69469 Weinheim (DE)
(72) Erfinder: PADIOS, Alexander, 12359 Berlin (DE); KANNEGIESSER, Heiko, 16515 Oranienburg (DE); CORDTS, Detlef, 16348 Wandlitz (DE)
(74) Vertreter: Reiser & Partner Patentanwälte mbB
(86) Internationale Anmeldenummer: PCT/EP2014/002308
(87) Internationale Veröffentlichungsnummer: WO 2015/062680

(56) Entgegenhaltungen:
- EP-A2- 0 860 833
- US-A- 3 749 340
- US-A1- 2008 229 968

## Beschreibung

Die Erfindung betrifft ein Lager, umfassend zumindest zwei Gummibuchsen mit jeweils vertikaler Rotationsachse, wobei die Gummibuchsen in einer funktionstechnischen Parallelschaltung angeordnet sind, wobei die beiden Gummibuchsen eine vormontierbare Einheit bilden, wobei die Gummibuchsen mit Abstand zueinander benachbart und jeweils in einem Buchsenträger angeordnet sind, wobei die Gummibuchsen jeweils einen im Wesentlichen hohlzylinderförmigen Buchsenkern aufweisen, der mit einer Konsole verbindbar ist, wobei die Buchsenträger durch eine Brücke miteinander verbunden sind und wobei die Brücke eine Befestigungsvorrichtung für die Befestigung eines zu lagernden Aggregats aufweist.

### Stand der Technik

Ein solches Lager ist aus der US 2008/229968 A1 bekannt und gelangt in Schienenfahrzeugen zur Anwendung.

Außerdem sind Lager zur Lagerung von schweren Maschinen, wie zum Beispiel großen Schiffsdieselmotoren oder Generatoren in Windkraftanlagen bekannt. Solche schweren Maschinen werden zum Beispiel auf einzelne Konuslager pro Lagerstelle abgestützt. Konuslager haben zwar einerseits den Vorteil, dass sie schwere Lasten aufnehmen können, andererseits jedoch den Nachteil, dass sie einen großen Bauraum benötigen, weil das Verhältnis aus der Länge eines solchen Lagers zu dessen größter Breite etwa eins beträgt.
In manchen Anwendungsfällen lassen sich derart breite Lager wegen enger Bauraumvorgaben nicht montieren.

### Darstellung der Erfindung

Der Erfindung liegt die Aufgabe zugrunde, ein Lager derart weiter zu entwickeln, dass dieses zur Lagerung schwerer Lasten auch dann gut geeignet ist, wenn der Einbauraum, in Querrichtung des Lagers betrachtet, nur eng bemessen ist und dass das Lager auf einfache Art und Weise an die jeweilige Einbausituation angepasst werden kann.

Diese Aufgabe wird erfindungsgemäß mit den Merkmalen von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist es vorgesehen, dass die Befestigungsvorrichtung eine Durchbrechung in der Brücke umfasst, dass in der Durchbrechung eine Gewindehülse angeordnet ist, dass die Gewindehülse stirnseitig einerseits einen ringförmigen Stützbund für das zu lagernde Aggregat aufweist und stirnseitig andererseits mittels eines Außengewindes höhenverstellbar mit einem ersten Innengewinde der die Durchbrechung begrenzenden Wandung der Brücke verbunden ist und dass die Gewindehülse ein zweites Innengewinde aufweist, zur Befestigung des zu lagernden Aggregats auf dem Stützbund.

Hierbei ist von Vorteil, dass die Last des zu lagernden Aggregats auf die beiden Gummibuchsen verteilt ist, jede der Gummibuchsen deshalb kompaktere Abmessungen aufweist, als ein einziges Konuslager oder ein Lager, das insgesamt nur eine Gummibuchse umfasst und dass die beiden Gummibuchsen, die die Last des zu lagernden Aggregats gemeinsam tragen, derart zueinander positionierbar sind, dass sie auch - in Querrichtung des Lagers betrachtet - in schmalen Einbauräumen montierbar sind.

Die beiden Gummibuchsen bilden eine vormontierbare Einheit. Die Montage des Lagers, das die beiden Gummibuchsen umfasst, ist dadurch vereinfacht und die Gefahr von Montagefehlern ist auf ein Minimum begrenzt.

Es ist vorgesehen, dass die Gummibuchsen mit Abstand zu einander benachbart und jeweils in einem Buchsenträger angeordnet sind, dass die Gummibuchsen jeweils einen im

Wesentlichen hohlzylinderförmigen Buchsenkern aufweisen, der mit einer Konsole verbindbar ist, dass die Buchsenträger durch eine Brücke miteinander verbunden sind und dass die Brücke eine Befestigungsvorrichtung für die Befestigung eines zu lagernden Aggregats aufweist. Durch die Anordnung der Gummibuchsen in den Buchsenträgern und deren Verbindung durch die Brücke sowie durch die dadurch entstandene vormontierbare Einheit, ist das erfindungsgemäße Lager einfach zu handhaben. Die Einheit als Ganzes kann bedarfsweise montiert oder demontiert werden. Außerdem ist von Vorteil, dass es sich bei den beiden zur Anwendung gelangenden Gummibuchsen zum Beispiel um Katalogkomponenten oder standardisierte Bauteile handeln kann, wodurch das Lager rasch und kostengünstig an die jeweiligen Gegebenheiten des Anwendungsfalles angepasst werden kann.
Der Abstand zwischen den Gummibuchsen erstreckt sich in Längsrichtung des Lagers, wobei dieser Abstand durch die Brücke überbrückt ist, die die beiden Buchsenträger miteinander verbindet.
Die Konsole, mit der die Buchsenkerne verbindbar sind, kann beispielsweise Bestandteil eines Schiffsrumpfs oder eines Gehäuses einer Windkraftanlage sein.
Das Lager kann zum Beispiel große Schiffsdieselmotoren oder Generatoren abstützen, wobei die Konsole gegenüber dem zu lagernden Aggregat mittels des Lagers schwingungsentkoppelt ist.

Die zumindest zwei Gummibuchsen sind bevorzugt jeweils rotationssymmetrisch ausgebildet und haben zum Beispiel eine zylindrische, konische oder sphärische Gummispur. Durch eine solche Ausgestaltung wird die Einstellung niedrigerster Eigenfrequenzen ermöglicht. Eine progressive Kennung in Längs- und Querrichtung des Lagers schützt das Lager und das zu lagernde Aggregat vor Schäden durch Lastspitzen und/oder Crashs.

Die Befestigungsvorrichtung umfasst eine Durchbrechung in der Brücke, wobei in der Durchbrechung eine Gewindehülse angeordnet ist, wobei die Gewindehülse stirnseitig einerseits einen ringförmigen Stützbund für das zu lagernde Aggregat aufweist und stirnseitig andererseits mittels eines Außengewindes höhenverstellbar mit einem ersten Innengewinde der die Durchbrechung begrenzenden Wandung der Brücke verbunden ist und wobei die Gewindehülse ein zweites Innengewinde aufweist, zur Befestigung des zu lagernden Aggregats auf dem Stützbund.
Bevorzugt ist die Befestigungsvorrichtung, in Längsrichtung des Lagers betrachtet, mittig zwischen den vertikalen Rotationsachsen der Gummibuchsen angeordnet. Die Gummibuchsen des Lagers sind dadurch während der bestimmungsgemäßen Verwendung gleichmäßig belastet. Daraus resultierend weist das Lager gleichbleibend gute Gebrauchseigenschaften während einer langen Gebrauchsdauer auf.
Auf dem ringförmigen Stützbund ist das zu lagernde Aggregat abgestützt. Durch die Größe des Stützbunds kann die Größe der Flächenpressung der Kontaktflächen von Stützbund und zu lagerndem Aggregat beeinflusst werden.

Die Gummibuchsen und/oder die Buchsenträger können als Gleichteile ausgebildet sein. Das Lager ist dadurch einfach und kostengünstig herstellbar, und die Montage des Lagers ist dadurch vereinfacht.

Bezogen auf die Brücke ist die Gewindehülse höhenverstellbar. Durch eine solche Höhenverstellung der Gewindehülse, bezogen auf die Brücke, kann das Lager auf einfache Art und Weise an die jeweilige Einbausituation angepasst werden. Zum Beispiel können durch die höhenverstellbare Gewindehülse auch fertigungsbedingte Toleranzen des zu lagernden Aggregats ausgeglichen werden. Durch die Höhenverstellung der Gewindehülse kann das Lager spielfrei mit dem zu lagernden Aggregat verbunden werden.

Die Befestigung des zu lagernden Aggregats mittels der Befestigungsvorrichtung mit dem Lager kann zum Beispiel durch eine Verschraubung erfolgen. Sobald das zu lagernde Aggregat auf dem Stützbund aufliegt, kann es mit dem zweiten Innengewinde der Gewindehülse verschraubt werden, wobei die Gewindehülse mit ihrem Außengewinde in ein erstes Innengewinde der Brücke eingeschraubt ist.

Die Buchsenkerne der Gummibuchsen können auf der dem Stützbund zugewandten Seite der Buchsenträger und der Brücke mit einer Anschlagplatte ortsfest verbunden sein, wobei die Anschlagplatte die Gewindehülse umfangsseitig mit radialem Abstand umschließt und den benachbarten Oberflächen von Buchsenträgern und Brücke während der bestimmungsgemäßen Verwendung des Lagers mit vertikalem Abstand benachbart zugeordnet ist. Durch die Anschlagplatte weist das Lager zur Begrenzung unerwünscht großer, extremer Auslenkbewegungen Anschläge in allen Raumrichtungen auf.
Eine Abhebesicherung, die eine vertikale Wegbegrenzung nach oben bildet, wird dadurch erreicht, dass der Buchsenträger und die Brücke nach Überwindung des vertikalen Abstands an die Anschlagplatte anlegbar sind. Eine Einfedersicherung wird durch eine vertikale Wegbegrenzung nach unten gebildet. Extreme Einfederbewegungen des zu lagernden Aggregats relativ zur Konsole können dadurch begrenzt werden, dass sich der Stützbund mit seiner dem zu lagernden Aggregat axial abgewandten Seite an die Anschlagplatte anlegt.
Der Weg des zu lagernden Aggregats relativ zur Konsole in horizontaler Richtung wird dadurch begrenzt, dass sich die Gewindehülse, nach Überwindung des radialen Abstands, an die Anschlagplatte anlegt.

In der Brücke kann zumindest eine Spannschraube angeordnet sein, zur gegenseitigen Vorspannung von Brücke und Buchsenträger gegenüber der Anschlagplatte. Weiter bevorzugt sind zwei Schrauben in Längsrichtung des Lagers beiderseits der Durchbrechung einander gegenüberliegend angeordnet. Vorteil der gegenseitigen Vorspannung von Brücke und Buchsenträger gegenüber der Anschlagplatte ist es, dass das Lager noch vor Auslieferung vorgespannt werden kann. Hierzu wird das Lager belastet/eingefedert und die Spannschrauben werden gegen die Anschlagplatte geschraubt. Somit kann die Einfederung während der Auslieferung erhalten bleiben. Von hervorzuhebendem Vorteil ist, dass dadurch ein einfacher Verbau des Lagers erfolgen kann, ohne dass das zu lagernde Aggregat angehoben werden muss. Nach der Montage des Lagers unter dem zu lagernden Aggregat werden die Spannschrauben gelöst, und die Vorspannung zwischen Brücke und Buchsenträger gegenüber der Anschlagplatte wird reduziert, sodass sich der Stützbund an das zu lagernde Aggregat anlegt und anschließend mit diesem verschraubt werden kann.
Die Verwendung von zwei Spannschrauben in Längsrichtung des Lagers beiderseits der Durchbrechung, also einander gegenüberliegend, ist von Vorteil, weil dadurch unerwünschte Verkantungen von Buchsenträger und Brücke relativ zur Anschlagplatte ausgeschlossen sind.

Die Buchsenträger und die Brücke sind bevorzugt einstückig in einander übergehend und materialeinheitlich ausgebildet. Hierbei ist von Vorteil, dass sich dadurch eine einfache Handhabung des Lagers ergibt, das Lager einen einfachen und teilearmen Aufbau aufweist und dadurch einfach und kostengünstig herstellbar ist.

Die Gummibuchsen können außenumfangsseitig jeweils eine Außenhülse aufweisen, wobei die Außenhülsen kraftschlüssig in den jeweiligen Buchsenträgern angeordnet sind. In dem zuvor beschriebenen Fall umfassen die Gummibuchsen jeweils den Buchsenkern und die Außenhülse, die den Buchsenkern mit radialem Abstand außenumfangsseitig umschließt, wobei in dem durch den Abstand gebildeten Spalt der Federkörper der Gummibuchse angeordnet ist. Der Federkörper kann durch Vulkanisation mit dem Buchsenkern und/oder der Außenhülse verbunden sein.

Die Gummibuchsen sind also bevorzugt als Gummi-Metall-Teile ausgebildet und umfassen den jeweiligen Buchsenkern, die jeweilige Außenhülse und jeweils einen im Wesentlichen hohlzylinderförmigen Federkörper.

Die Buchsenträger weisen jeweils einen Außendurchmesser auf, wobei der größte Außendurchmesser der größten Breite des Lagers entspricht. Hierbei ist von Vorteil, dass das Lager nicht breiter ist, als der größte Außendurchmesser eines Buchsenträgers. In Querrichtung baut das Lager dadurch besonders kompakt und ist auch geeignet, in Querrichtung bei engen Einbauräumen montiert werden zu können.

Das Verhältnis aus der Länge des Lagers zu dessen größter Breite beträgt bevorzugt zumindest 2, weiter bevorzugt 2,5 bis 3,5.

Dadurch, dass die beiden Gummibuchsen in einer funktionstechnischen Parallelschaltung zur Anwendung gelangen und die Last des zu lagernden Aggregats deshalb gemeinsam aufnehmen, können auch schwere Lasten auf dem kompakt bauenden Lager abgestützt werden, wobei das Lager trotzdem eine im Vergleich zur Länge nur geringe Breite aufweist. Zur Montage des Lagers in beengten Einbauverhältnissen ist das von großem Vorteil.

### Kurzbeschreibung der Zeichnung

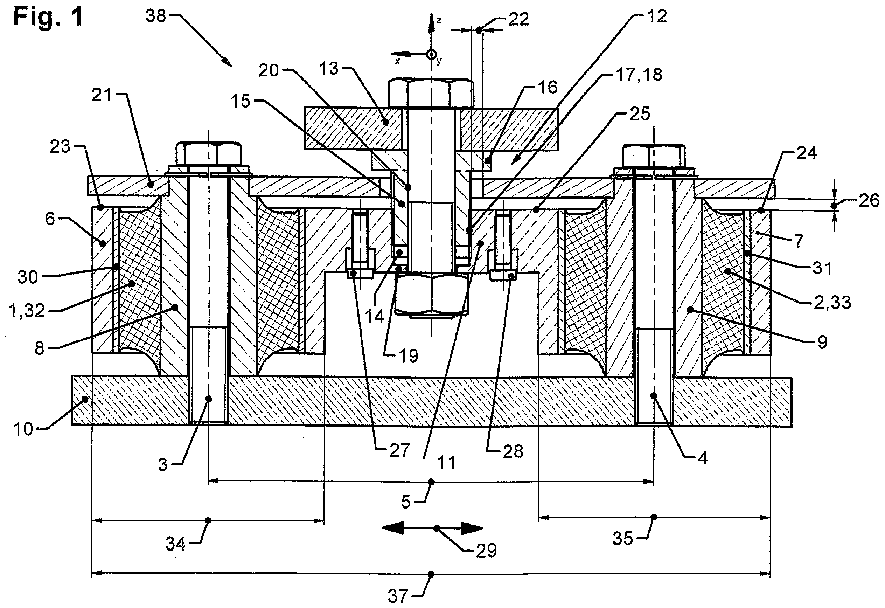

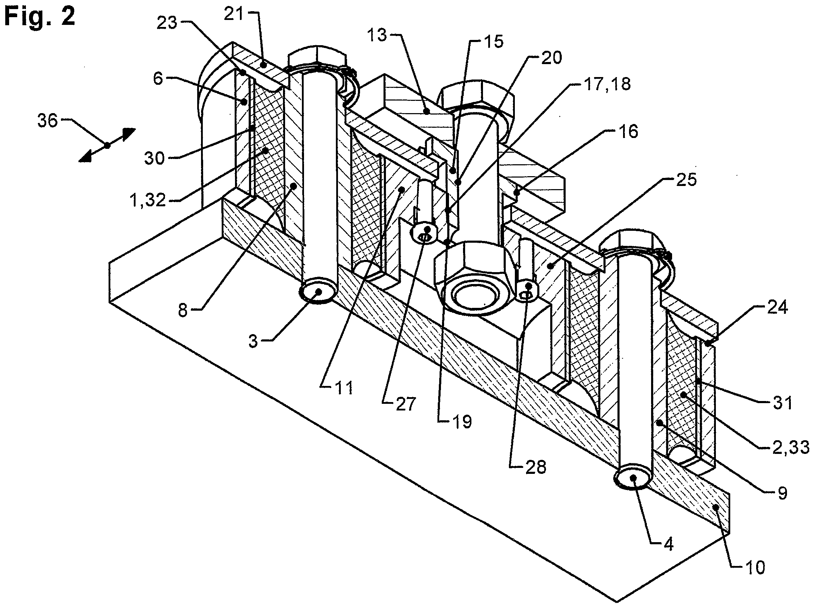

Ein Ausführungsbeispiel des erfindungsgemäßen Lagers wird nachfolgend anhand der Figuren 1 und 2 näher erläutert. Diese zeigen jeweils in schematischer Darstellung:
- Fig. 1: ein erstes Ausführungsbeispiel des erfindungsgemäßen Lagers, das in Längsrichtung geschnitten ist,
- Fig. 2: das Lager aus Figur 1 in einer perspektivischen Darstellung von schräg unten,
- Fig. 3: ein zweites Ausführungsbeispiel des erfindungsgemäßen Lagers,
- Fig. 4: das Lager aus Figur 3 in einer perspektivischen Darstellung von schräg unten.

### Ausführung der Erfindung

In den Figuren 1 und 2 ist ein erstes Ausführungsbeispiel des erfindungsgemäßen Lagers gezeigt.

Das Lager umfasst zwei Gummibuchsen 1, 2, die rotationssymetrisch um eine vertikale Rotationsachse 3, 4 ausgebildet sind. Die Gummibuchsen 1, 2 umfassen den jeweiligen Buchsenkern 8, 9, die jeweilige Außenhülse 30, 31 und jeweils einen hohlzylinderförmigen Federkörper 32, 33 aus elastomerem Werkstoff. Die Buchsenkerne 8, 9 und die Außenhülsen 30, 31 bestehen in diesem Ausführungsbeispiel jeweils aus einem metallischen Werkstoff.

Jede Gummibuchse 1,2 ist in einem Buchsenträger 6, 7 angeordnet, wobei die Buchsenträger 6, 7 in Längsrichtung 29 des Lagers mit Abstand 5 zu einander benachbart angeordnet sind. Die Buchsenträger 6, 7 sind durch die Brücke 11 miteinander verbunden, wobei die beiden Buchsenträger 6, 7 und die Brücke 11 in dem hier gezeigten Ausführungsbeispiel einstückig in einander übergehend und materialeinheitlich ausgebildet sind. Die beiden Gummibuchsen 1, 2 und die beiden Buchsenträger 6, 7 sind jeweils als Gleichteile ausgebildet. Die Buchsenträger 6, 7 und die Brücke 11 bestehen aus einem metallischen Werkstoff.

Die Gummibuchsen 1, 2 sind in einer funktionstechnischen Parallelschaltung angeordnet und stützen ein hier nur schematisch angedeutetes, zu lagerndes Aggregat 13 gemeinsam ab. Bei dem zu lagernden Aggregat 13 kann es sich beispielsweise um einen Schiffsdieselmotor handeln.

Ebenfalls nur schematisch angedeutet ist die Konsole 10, die mit den Buchsenkernen 8, 9 verbunden ist. Die Konsole 10 kann zum Beispiel in einem Schiffsrumpf abgestützt sein. Das Lager, die Konsole 10 und das zu lagernde Aggregat 13 bilden eine Lageranordnung.

Die Brücke 11 weist eine Befestigungsvorrichtung 12 auf, die mit dem zu lagernden Aggregat 13 verbunden ist. Die Befestigungsvorrichtung 12 ist primär durch eine höhenverstellbar in der Brücke 11 aufgenommene Gewindehülse 15 gebildet, wobei die Gewindehülse 15 durch ein Außengewinde 17 mit dem ersten Innengewinde 18 der die Durchbrechung 14 begrenzenden Wandung 19 verbunden ist und ihrerseits ein zweites Innengewinde 20 aufweist, mit dem das zu lagernde Aggregat 13 verschraubt ist.
Das Außengewinde 17 der Gewindehülse 15 und das Innengewinde 18 der Wandung 19 sind selbsthemmend ausgebildet, sodass die Gewindehülse in ihrer Höhe, relativ zur Brücke 11 genau justiert werden kann, um das zu lagernde Aggregat 13 gut abstützen zu können.

Die Gewindehülse 15 weist auf ihrer dem zu lagernden Aggregat 13 zugewandten Seite einen ringförmigen Stützbund 16 auf, der das zu lagernde Aggregat 13 anliegend berührt.

Die Konsole 10 und das zu lagernde Aggregat 13 sind im hier dargestellten Ausführungsbeispiel mit dem Lager jeweils verschraubt.

Um unerwünscht hohe mechanische Belastungen für die Federkörper 32, 33 während der bestimmungsgemäßen Verwendung des Lagers zu vermeiden, ist die Anschlagplatte 21 vorgesehen. Extreme Auslenkbewegungen der Buchsenkerne 8, 9 relativ zu den Buchsenträgern 6, 7, der Brücke 11, der Gewindehülse 15 und damit zum zu lagernden Aggregat 13 werden verhindert. Dazu umschließt die Anschlagplatte 21 die Gewindehülse 15 umfangsseitig mit radialem Abstand 22. Außerdem ist die Oberfläche der Anschlagplatte 21 den Oberflächen 23, 24, 25 von Buchsenträgern 6, 7 und Brücke 11 mit dem vertikalen Abstand 26 benachbart zugeordnet.
Bevor unerwünscht hohe mechanische Belastungen auf die Federkörper 32, 33 wirken, begrenzt die Anschlagplatte 21 die Relativbewegungen und begünstigt daher gleichbleibend gute Gebrauchseigenschaften des Lager während einer langen Gebrauchsdauer.
Die Anschlagplatte 21 ist ortsfest mit den Buchsenkernen 8, 9 verbunden.

Die beiden Spannschrauben 27, 28 sind in Längsrichtung 29 des Lagers beiderseits der Durchbrechung 14, einander gegenüberliegend, angeordnet. Die Montage des Lagers unter einem zu lagernden Aggregat ist dadurch vereinfacht; für die Montage des Lagers ist es nicht erforderlich, dass das zu lagernde Aggregat 13 angehoben wird.

Die Krafteinleitung vom zu lagernden Aggregat 13 in das Lager erfolgt über die Gewindehülse 15 in die Brücke 11 und die Buchsenträger 6, 7 und anschließend von dort über die Außenhülsen 30, 31 in die Federkörper 32, 33 und dann in die Buchsenkerne 8, 9, die mit der Konsole 10 verbunden sind. Die Isolation betriebsbedingt vom Aggregat 13 eingeleiteter Schwingungen erfolgt durch die Federkörper 32, 33 der Gummibuchsen 1, 2.

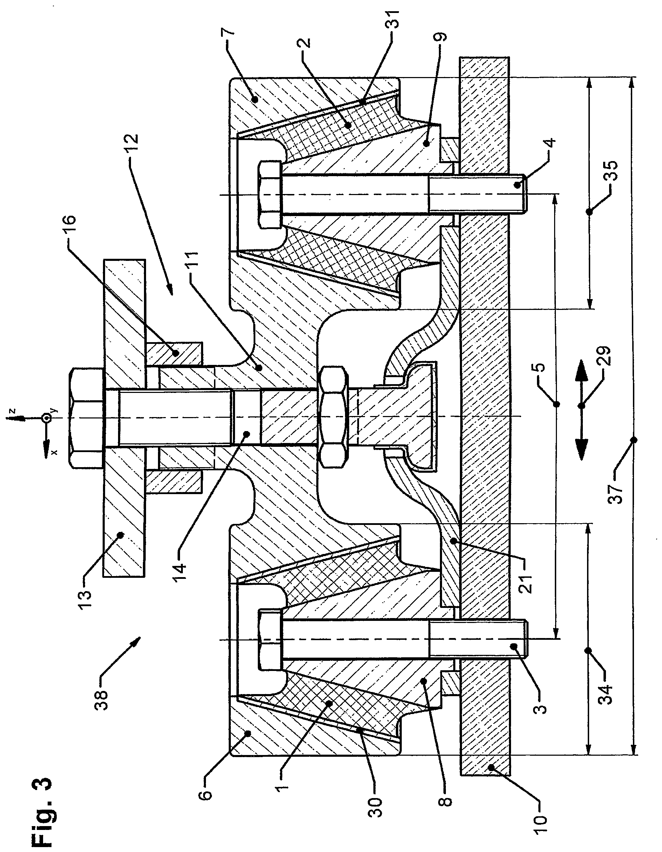

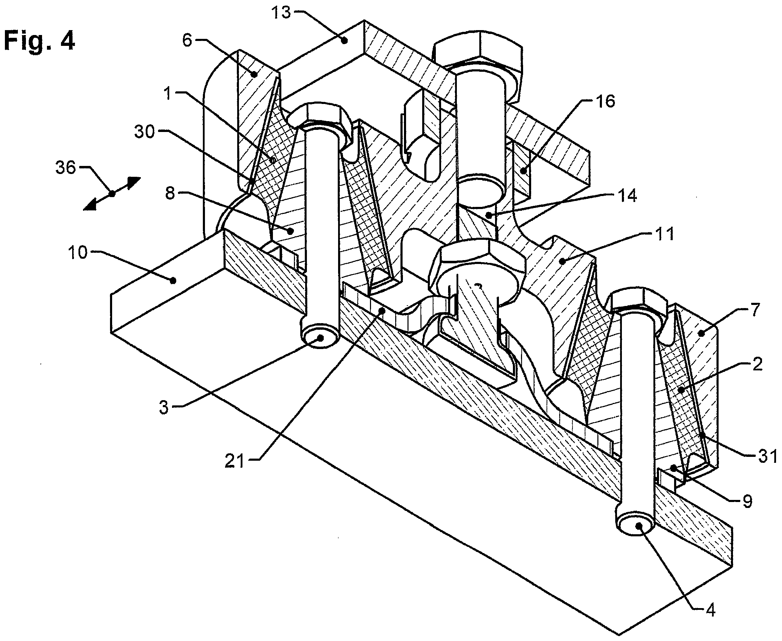

In den Fig. 3 und 4 ist ein zweites Ausführungsbeispiel des erfindungsgemäßen Lagers gezeigt.

Auch in diesem Ausführungsbeispiel umfasst das Lager zwei Gummibuchsen 1, 2 mit jeweils vertikaler Rotationsachse 3, 4, wobei die Gummibuchsen 1, 2 in einer funktionstechnischen Parallelschaltung angeordnet sind. Die beiden Gummibuchsen 1, 2 bilden zusammen mit der Brücke 11 die vormontierbare Einheit 38.
Die Gummibuchsen 1, 2 sind in diesem Ausführungsbeispiel, im Gegensatz zum Ausführungsbeispiel aus den Figuren 1 und 2, nicht im Wesentlichen zylindrisch, sondern konisch ausgebildet.
Mit Bezugsziffer 16 ist eine Nutmutter zur Höhenverstellung des Lagers bezeichnet.
Die Anschlagplatte 21 wird in dieser Ausgestaltung am Boden des Lagers verbaut.
Das Verhältnis aus der Länge 37 des Lagers zu dessen größter Breite 36 beträgt, wie auch im Ausführungsbeispiel aus den Figuren 1 und 2, etwa 3.

Durch eine konische Gestaltung der Gummispuren der Gummibuchsen 1 und 2 lässt sich eine höhere Vertikalsteifigkeit einstellen und somit lassen sich noch höhere Vertikallasten aufnehmen. Je nach Ausprägung des Konuswinkels lässt sich ein Steifigkeitsverhältnis vertikal/längs einstellen. Im Ausführungsbeispiel ist die Anschlagplatte 21 nach unten verlegt. Dies stellt eine alternative Möglichkeit dar, wie die vertikale Wegbegrenzung umgesetzt werden kann.

## Patentansprüche

1. Lager, umfassend zumindest zwei Gummibuchsen (1, 2) mit jeweils vertikaler Rotationsachse (3, 4), wobei die Gummibuchsen (1, 2) in einer funktionstechnischen Parallelschaltung angeordnet sind, wobei die beiden Gummibuchsen (1, 2) eine vormontierbare Einheit (38) bilden, wobei die Gummibuchsen (1, 2) mit Abstand (5) zueinander benachbart und jeweils in einem Buchsenträger (6, 7) angeordnet sind, wobei die Gummibuchsen (1, 2) jeweils einen im Wesentlichen hohlzylinderförmigen Buchsenkern (8, 9) aufweisen, der mit einer Konsole (10) verbindbar ist, wobei die Buchsenträger (6, 7) durch eine Brücke (11) miteinander verbunden sind und wobei die Brücke (11) eine Befestigungsvorrichtung (12) für die Befestigung eines zu lagernden Aggregats (13) aufweist, **dadurch gekennzeichnet, dass** die Befestigungsvorrichtung (12) eine Durchbrechung (14) in der Brücke (11) umfasst, dass in der Durchbrechung (14) eine Gewindehülse (15) angeordnet ist, dass die Gewindehülse (15) stirnseitig einerseits einen ringförmigen Stützbund (16) für das zu lagernde Aggregat (13) aufweist und stirnseitig andererseits mittels eines Außengewindes (17) höhenverstellbar mit einem ersten Innengewinde (18) der die Durchbrechung (14) begrenzenden Wandung (19) der Brücke (11) verbunden ist und dass die Gewindehülse (15) ein zweites Innengewinde (20) aufweist, zur Befestigung des zu lagernden Aggregats (13) auf dem Stützbund (16).

2. Lager nach Anspruch 1, **dadurch gekennzeichnet, dass** die Buchsenkerne (8, 9) der Gummibuchsen (1, 2) auf der dem Stützbund (16) zugewandten Seite der Buchsenträger (6, 7) und der Brücke (11) mit einer Anschlagplatte (21) ortsfest verbunden sind, dass die Anschlagplatte (21) die Gewindehülse (15) umfangsseitig mit radialem Abstand (22) umschließt und den benachbarten Oberflächen (23, 24, 25) von Buchsenträgern (6, 7) und Brücke (11) während der bestimmungsgemäßen Verwendung des Lagers mit vertikalem Abstand (26) benachbart zugeordnet ist.

3. Lager nach einem der Ansprüche 1 oder 2, **dadurch gekennzeichnet, dass** in der Brücke (11) zumindest eine Spannschraube (27, 28) angeordnet ist, zur gegenseitigen Vorspannung von Brücke (11) und Buchsenträger (6, 7) gegenüber der Anschlagplatte (21).

4. Lager nach Anspruch 3, **dadurch gekennzeichnet, dass** zwei Spannschrauben (27, 28) in Längsrichtung (29) des Lagers beiderseits der Durchbrechung (14) einander gegenüberliegend angeordnet sind.

5. Lager nach einem der Ansprüche 1 bis 3, **dadurch gekennzeichnet, dass** die Buchsenträger (6, 7) und die Brücke (11) einstückig ineinander übergehend und materialeinheitlich ausgebildet sind.

6. Lager nach einem der Ansprüche 1 bis 5, **dadurch gekennzeichnet, dass** die Gummibuchsen (1, 2) aussenumfangsseitig jeweils eine Außenhülse (30, 31) aufweisen und dass die Außenhülsen (30, 31) kraftschlüssig in den jeweiligen Buchsenträgern (6, 7) angeordnet sind.

7. Lager nach einem der Ansprüche 1 bis 6, **dadurch gekennzeichnet, dass** die Gummibuchsen (1, 2) jeweils als Gummi-Metall-Teil ausgebildet sind und den jeweiligen Buchsenkern (8, 9), die jeweilige Außenhülse (30, 31) und jeweils einen im Wesentlichen hohlzylinderförmigen Federkörper (32, 33) umfassen.

8. Lager nach einem der Ansprüche 1 bis 7, **dadurch gekennzeichnet, dass** die Buchsenträger (6, 7) jeweils einen Außendurchmesser (34, 35) aufweisen und dass der größte Außendurchmesser (34, 35) der größten Breite (36) des Lagers entspricht.

9. Lager nach einem der Ansprüche 1 bis 8, **dadurch gekennzeichnet, dass** das Verhältnis aus der Länge (37) des Lagers zu dessen größter Breite (36) zumindest 2 beträgt.

## Claims

1. Bearing, comprising at least two rubber bushings (1, 2), each having a vertical axis of rotation (3, 4), wherein the rubber bushings (1, 2) are functionally connected in parallel, wherein the two rubber bushings (1, 2) form a unit (38) that can be pre-assembled, wherein the rubber bushings (1, 2) are arranged adjacently at a distance (5) from one another and are each in a bushing carrier (6, 7), wherein the rubber bushings (1, 2) each have a substantially hollow cylindrical-shaped bushing core (8, 9) which is connectable to a bracket (10), wherein the bushing carriers (6, 7) are interconnected by a bridge (11) and wherein the bridge (11) has a fixing device (12) for fixing an assembly (13) to be supported, **characterised in that** the fixing device (12) comprises an opening (14) in the bridge (11), **in that** in the opening (14) a threaded sleeve (15) is arranged, **in that** at its end face the threaded sleeve (15) has an annular collar (16) for the assembly (13) to be supported on the one side, and at the end face on the other side is height-adjustably connected by means of an external thread (17) to a first internal thread (18) of the wall (19) of the bridge (11) which delimits the opening (14), and **in that** the threaded sleeve (15) has a second internal thread (20) for fixing the assembly (13) to be supported on the collar (16).

2. Bearing according to claim 1, **characterised in that** the bushing cores (8, 9) of the rubber bushings (1, 2) on the side of the bushing carriers (6, 7) and the bridge (11) facing the collar (16) are connected immovably to a stop plate (21), **in that** the stop plate (21) surrounds the threaded sleeve (15) along its circumference at a radial distance (22) and is associated adjacently and at a vertical distance (26) with the adjacent surfaces (23, 24, 25) of bushing carriers (6, 7) and bridge (11) during the intended use of the bearing.

3. Bearing according to any of claims 1 or 2, **characterised in that** at least one tensioning screw (27, 28) is arranged in the bridge (11) for the mutual pretensioning of the bridge (11) and bushing carriers (6, 7) relative to the stop plate (21).

4. Bearing according to claim 3, **characterised in that** two tensioning screws (27, 28) are arranged to be mutually opposing in a longitudinal direction (29) of the bearing on either side of the opening (14).

5. Bearing according to any of claims 1 to 3, **characterised in that** the bushing carriers (6, 7) and the bridge (11) are formed in one piece in a manner merging into one another and of the same material.

6. Bearing according to any of claims 1 to 5, **characterised in that** the rubber bushings (1, 2) each comprise an outer sleeve (30, 31) on their outer circumference and **in that** the outer sleeves (30, 31) are arranged in a force-locking manner in the respective bushing carriers (6, 7).

7. Bearing according to any of claims 1 to 6, **characterised in that** the rubber bushings (1, 2) are each constructed as rubber-metal parts and comprise the respective bushing core (8, 9), the respective outer sleeve (30, 31) and a respective substantially hollow cylindrical-shaped spring body (32, 33).

8. Bearing according to any of claims 1 to 7, **characterised in that** the bushing carriers (6, 7) each have an outer diameter (34, 35) and **in that** the greatest outer diameter (34, 35) corresponds to the greatest width (36) of the bearing.

9. Bearing according to any of claims 1 to 8, **characterised in that** the ratio of the length (37) of the bearing to its greatest width (36) is at least 2.

## Revendications

1. Palier, comprenant au moins deux douilles en caoutchouc (1, 2) dotées respectivement d'un axe de rotation vertical (3, 4), dans lequel les douilles en caoutchouc (1, 2) sont disposées dans un montage en parallèle fonctionnel, dans lequel les deux douilles en caoutchouc (1, 2) forment une unité prémontable (38), dans lequel les deux douilles en caoutchouc (1, 2) sont disposées adjacentes l'une à l'autre avec un écart (5) et dans un support de douille respectif (6, 7), dans lequel les douilles en caoutchouc (1, 2) comportent respectivement un cœur de douille (8, 9) essentiellement en forme de cylindre creux, lequel peut être relié à une console (10), dans lequel les supports de douille (6, 7) sont reliés l'un à l'autre par un pont (11) et dans lequel le pont (11) comporte un dispositif de fixation (12) pour la fixation d'un groupe moteur (13) à supporter, **caractérisé en ce que** le dispositif de fixation (12) comprend une découpe (14) dans le pont (11), **en ce qu'**un manchon fileté (15) est agencé dans la découpe (14), **en ce que** le manchon fileté (15) comporte sur la face avant d'un côté une bride de soutien annulaire (16) pour le groupe moteur (13) à supporter et est relié de l'autre côté sur la face avant de manière réglable en hauteur, au moyen d'un filetage externe (18), à un premier filetage interne (18) de la paroi (19) du pont (11) délimitant la découpe (14) et **en ce que** le manchon fileté (15) comporte un deuxième filetage interne (20) pour la fixation du groupe moteur (13) à supporter sur la bride de soutien (16).

2. Palier selon la revendication 1, **caractérisé en ce que** les cœurs de douille (8, 9) des douilles en caoutchouc (1, 2) sont reliés de manière stationnaire à une plaque de butée (21) sur le côté des supports de douille (6, 7) et du pont (11) faisant face à la bride de soutien (16), **en ce que** la plaque de butée (21) entoure sur la direction du pourtour le manchon fileté (15) avec un écart radial (22) et est associée adjacente aux surfaces adjacentes (23, 24, 25) des supports de douille (6, 7) et du pont (11) avec un écart vertical (26) pendant l'utilisation conforme du palier.

3. Palier selon la revendication 1 ou 2, **caractérisé en ce qu'**au moins une vis de serrage (27, 28) est agencée dans le pont (11), pour la précontrainte mutuelle du pont (11) et des supports de douille (6, 7) par rapport à la plaque de butée (21).

4. Palier selon la revendication 3, **caractérisé en ce que** deux vis de serrage (27, 28) sont agencées en opposition l'une par rapport à l'autre des deux côtés de la découpe (14) dans la direction longitudinale (29) du palier.

5. Palier selon l'une des revendications 1 à 3, **caractérisé en ce que** les supports de douille (6, 7) et le pont (11) sont réalisés d'une seule pièce l'un passant dans l'autre et d'une seule matière.

6. Palier selon l'une des revendications 1 à 5, **caractérisé en ce que** les douilles en caoutchouc (1, 2) comportent respectivement un manchon extérieur (30, 31) sur le pourtour extérieur et **en ce que** les manchons extérieurs (30, 31) sont agencés dans les supports de douille (6, 7) respectifs par engagement de force.

7. Palier selon l'une des revendications 1 à 6, **caractérisé en ce que** les douilles en caoutchouc (1, 2) sont réalisées respectivement comme pièces de caoutchouc et métal et comprennent le cœur de douille (8, 9) respectif, le manchon extérieur (30, 31) respectif et respectivement un corps élastique (32, 33) essentiellement en forme de cylindre creux.

8. Palier selon l'une des revendications 1 à 7, **caractérisé en ce que** les supports de douille (6, 7) comportent un diamètre extérieur respectif (34, 35) et **en ce que** le diamètre extérieur le plus élevé (34, 35) correspond à la largeur (36) la plus élevée du palier.

9. Palier selon l'une des revendications 1 à 8, **caractérisé en ce que** le rapport de la longueur (37) du palier à la largeur (36) la plus élevée de celui-ci est au moins 2.
